# EUROPEAN PATENT SPECIFICATION

(11) **EP 0 538 242 B1**
(45) Date of publication and mention of the grant of the patent: **25.11.1998**
(21) Application number: 93100555.7
(22) Date of filing: 28.03.1983
(51) Int. Cl.: A01G 25/02

(54) **Drip irrigation system employing adjacently arranged flow-restricting passages**
Tropfbewässerungssystem mit nebeneinanderliegenden und den Ausfluss begrenzenden Passagen
Système d'irrigation goutte à goutte au moyen de passages de courant restrictifs voisins

(30) Priority: 01.04.1982 US 364213; 01.04.1982 US 364229
(43) Date of publication of application: 21.04.1993
(62) Divisional of application: 87111894.9
(73) Proprietor: Chapin, Richard Dexter, Watertown New York 13601 (US)
(72) Inventor: Chapin, Richard Dexter, Watertown New York 13601 (US)
(74) Representative: Casalonga, Axel

(56) References cited:
- GB-A- 1 596 233
- US-A- 3 873 030
- US-A- 4 247 051

## Description

This invention relates to a water distributing hose for use in a trickle irrigation or drip irrigation system particularly adapted for the surface or subsurface watering of long rows of crops, whether on greenhouse benches or in the field, and more specifically in a trickle irrigation system wherein the water is allowed to discharge slowly, directly at the desired point of application, normally about the base of the plants.

To be practical, trickle irrigation must provide for the delivery of water at a slow uniform rate over long lengths or runs of hose. In the past, various trickle irrigation systems have been tried, including pipes with small holes, pipes with various types of small outlet members, pipes with small tubes for outlets, plastic pipes with slits, tubes which ooze water through the wall, and hoses which ooze water through a sewn seam. Each type has depended on a small orifice, low pressure, friction created in a long outlet member such as a tube, or a combination of these to limit the flow through each individual outlet. However, there are disadvantages associated with each such known system. For example, the use of extremely small orifices such as holes, slits, or the like, tend to clog easily. Tube outlets and special outlet members are relatively expensive to produce and ship, particularly when considering the large quantities required. In addition, low pressure systems and tubes which provide for an oozing of the water through the wall are not capable of producing a uniform flow along the length of the hose or the like, particularly on sloping runs.

One water distributing hose which has met with success is that disclosed in U.S. Reissue Patent No. Re. 28,095, reissued July 30, 1974 to Chapin. In the reissue patent, a multi-chamber water distributing hose is shown in the context of a trickle irrigation system. Another hose which has met with success is that currently marketed by applicant under the name "TRI-WALL" hose. The "TRI-WALL" hose is an enlongated water distributing hose capable of effectively watering large areas with readily available water pressures and in a manner whereby an essentially uniform watering is achieved. The pressure is substantially maintained throughout the length of the hose through a stacked arrangement of first, second, and third fluid channels, which enable a maintaining of the relatively high pressure throughout the length of the hose and the reduction of this pressure directly at the point of the passing of the water from the high pressure first fluid channel through a series of first fluid-passing openings to the much smaller second fluid channel, and a further pressure reduction as the water passes within the third fluid channel between a series of second fluid-passing openings and a series of discharge fluid-passing openings.

Although the performance of all of the Chapin hoses has been excellent, there is, nevertheless, always a need for improved performance.

US-A-4 247 051 reveals, in the embodiment of Figure 10, an irrigation hose made from an elongated flat sheet of flexible water-impervious material bent along its length to have its longitudinal margins overlapping. Two spaced continuous longitudinal ribs are disposed between the overlapping margins so as to define between said margins a plurality of discrete longitudinally extending flow-restricting passages disposed longitudinally end to end. A continuous longitudinal main supply channel is defined inside the hose by said sheet material and the inner of said ribs. A series of longitudinally spaced inlets in the inner margin provides fluid communication between the main supply channel and the flow-restricting passages and a series of longitudinally spaced outlets in the outer margin provides fluid communication between each flow-restricting passage and the exterior of the hose.

The elongated fluid distributing hose as claimed for use in a fluid distributing system, comprises : an elongated sheet of water-impervious plastics material having two longitudinally extending opposite margins, said material being folded upon itself such that said margins overlap one another ; two longitudinally extending strips transversally spaced from one another , disposed between and secured to said two overlapping margins and defining between them a plurality of discrete longitudinally extending flow-restricting passages disposed longitudinally end-to-end ; a continuous longitudinal main supply channel defined by said sheet material and a first of said strips, said supply channel being adapted for fluid communication with a source of fluid under pressure ; a series of longitudinally spaced inlets for providing fluid communication between said main supply channel and each of said flow-restricting passages ; and a series of longitudinally spaced outlets passing fluid from each of said flow-restricting passages to the exterior of the hose. According to the invention, said discrete flow-restricting passages are defined by zig-zag or serpentine flow-restricting paths molded into an elongated ribbon of plastic material disposed between and secured to said overlapping margins.

The hose of the present invention for use in an irrigation system for plants, vegetables, and the like enables the construction of a drip irrigation system which is relatively inexpensive while, at the same time, being capable of effectively watering large areas with readily available water pressures and in a manner whereby an essentially uniform watering is achieved. This desired uniform watering results notwitstanding sloping ground conditions and the like. Water pressure is substantially maintained throughout the length of the tube without requiring the use of extremely small orifices which easily clog from impurities, reliance instead being had on a particular arrangement of a main supply channel exhibits relatively high water pressure throughout the length of the hose. A reduction of this pressure takes place in the water distributing network with the passing of the water from the high pressure main supply channel through a series of first fluid-passing openings or inlet stations to a much smaller first fluid-restricting passage before being released to the exterior of the hose through a series of discharge fluid-passing openings or outlet stations. In certain embodiments, the flow-restricting passages include a flow-regulating structure.

The hose of the instant invention is preferably of a thin water-impervious plastic material, such as polyethylene. The main supply channel moves the water at a relatively high pressure along the full length of the hose for discharge into the water distributing network for final discharge out of the hose itself through a number of openings or outlet stations in the outer passage. The pressure decrease within the water distributing network is such that the flow of water at the outlet stations of the network is in the form of a drip under substantially quiescent conditions.

Advantages of the present invention include the provision of a system which can be inexpensively produced, such being essential because of the vast quantities of hose needed to irrigate field crop installations which typically involve thousands of acres. The system is compact, the hose capable of being flattened and rolled, thereby simplifying the handling, storage, shipping, installation and removal. The hose used is of a highly durable nature. In addition, large areas can be simultaneously watered without requiring excessively high pressures or large volumes of water with the distribution of the water being uniform over extremely long lengths as well as on sloping layouts and in both surface and subsurface installations.

These, together with other features and advantages which will become subsequently apparent, reside in the details of construction and operation as more fully hereinafter described and claimed reference being made to the accompanying drawings forming a part hereof, wherein like numerals refer to like parts throughout.

Figure 1 is a perspective view of a portion of a field showing a typical use of the fluid distributing hose of the present invention.

Figure 2 is a perspective view of a portion of a hose which does not embody the teachings of the subject invention.

Figure 3 is a section taken along lines 3-3 of Figure 2.

Figure 4 is a view similar to that of Figure 2 with a portion of the hose removed to reveal the interior structure of the flow-restricting passages.

Figure 5 is a schematic view of a second embodiment of the hose of Figure 2.

Figure 6 is a schematic view useful in explaining the operation of the hose of Figure 2.

Figure 7 is a view taken along lines 7-7 of Figure 2.

Figure 8 is a perspective view of an embodiment of a hose according to the invention.

Figure 9 is a view taken along lines 9-9 of Figure 8.

Figure 10 is a view taken along lines 10-10 of Figure 9.

Figure 11 is a view taken along lines 11-11 of Figure 9.

Figure 12 is a perspective diagrammatic drawing to illustrate an embodiment of a machine used to manufacture a hose according to the teachings of the present invention.

Figure 13 is an enlarged view of the molding wheel of the machine of Figure 12.

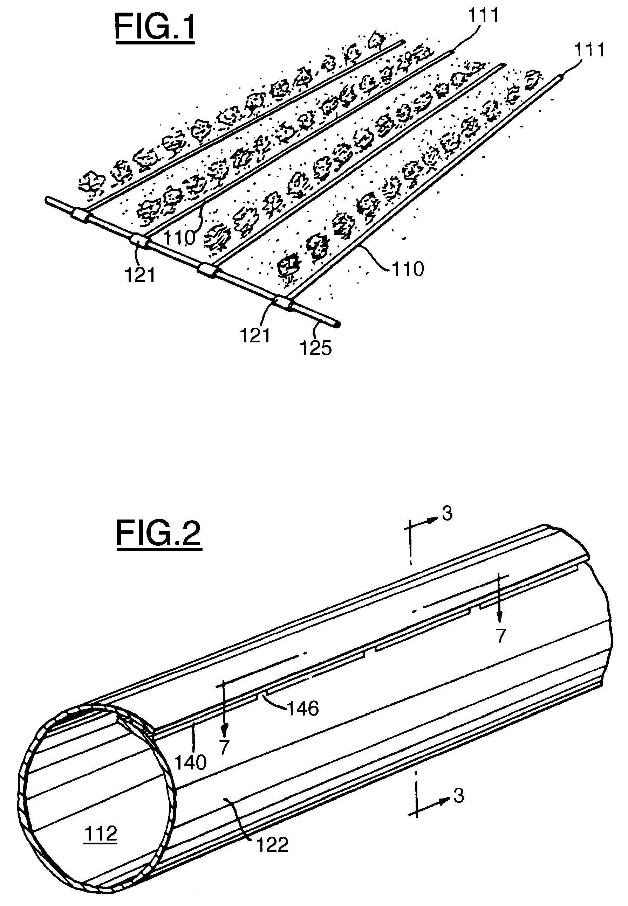

With reference to Figures 1-7, reference 110 is used to generally designate a water distributing hose which does not embody the teachings of the present invention. The hose 110 basically comprises a gross water distributing channel 112 and a fine water distributing network 114. Adjacent to channel 112 and sharing a common wall 116 is the network 114, which basically comprises a flow-restricting passage disposed about the exterior of the main supply channel 112. The passage is substantially parallel to the longitudinal axis A of the main supply channel.

In use, the main supply channel 112 is connected to a source of pressurized water. This can be effected, for example, by connecting the main supply channel 112 at one end of hose 110 to a suitable fitting 121 in main 125. The other end 111 of the hose 110 is closed off to prevent escape of water from the hose. Such an arrangement has been generally illustrated in Figure 1 wherein the hose 110 is illustrated next-to rows of vegetables in a large field. It will be appreciated that such an arrangement is also equally adaptable for use in greenhouses and home gardens.

With reference to Figures 2 through 4, an elongated layer or sheet 122 of thin water-impervious plastic material, such as a thermoplastic film, terminates in two longitudinally extending margins 124 and 126 which overlap each other in a predetermined fashion. Interposed between the overlapping margins is a series of elongated longitudinally extending strips of varying lengths and arranged in a particular manner, yet to be described, to define the flow-restricting passage 114. The strips are also made from a water-impervious plastic material.

A first set of strips 130 is positioned near the edge 132 of margin 124, so that each of the strips defines an axis substantially parallel to and equidistant from the longitudinal axis A of the hose 110. The ends 134 of the strips are periodically spaced from each other to define inlet stations as a series of fluid-passing openings 136 therein. The frequency of the inlet stations typically ranges from a few inches to several feet throughout the full length of the hose. The inlet stations or first fluid-passage openings 136 are positioned so that they form a means of fluid communication between the main supply channel 112 and the flow-restricting passage 114. The spaces between the strips 130 define the first inlet stations 136, and the strips 130, in effect, define a common wall 133 between the main supply channel 112 and the passage 118.

In like manner, a second set of strips 140 is positioned near the edge 162 of the margin 126 so that the strips define an axis substantially parallel to the longitudinal axis A of the hose 110. The placement of the strips 140 is such that they are positioned near to, but spaced from, the wall 133 defined by strips 130. The ends 144 of the strips are spaced from each other to define a series of fluid discharge openings or outlet stations 146 to provide for fluid communication between the passage and the exterior of the hose. The spacing between the outlet stations 146 is substantially the same as that between the inlet stations 136.

The inlet and outlet stations 136 and 146 are substantially of a rectangular cross section and precisely formed by the positioning of the strips between the overlapping margins 124 and 126. The size of the outlets at each station is chosen so that there is a minimum chance of clogging as water passes through the station.

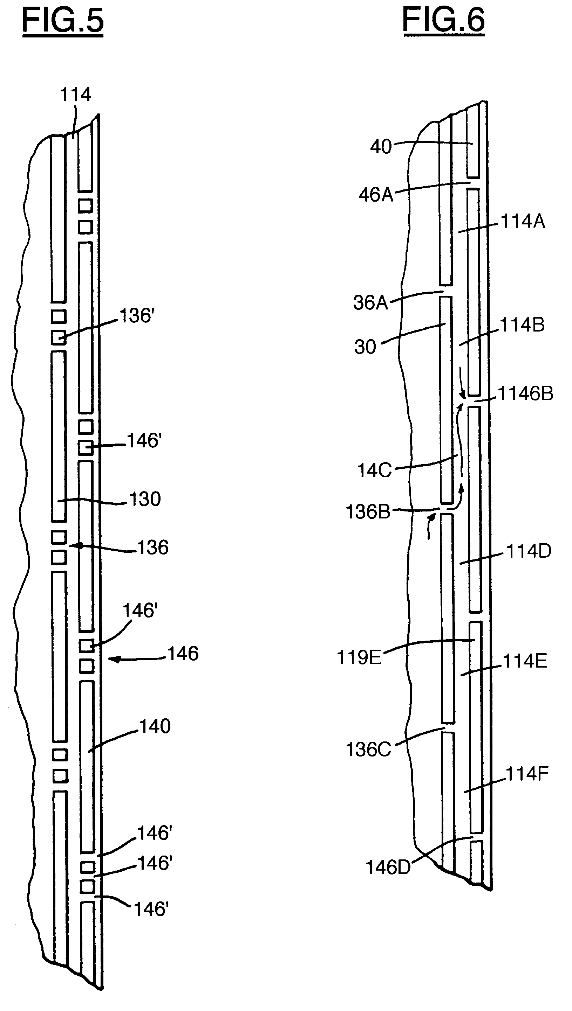

For the purposes of simplifying the presentation, the cross passageways or fluid-passing stations 136 and 146 in Figures 2-4 are shown in the context of a single opening. However, as shown in Figure 5, three or more openings may be used close together to comprise each station. By example, the three openings 146' constitute one fluid-passing station which minimizes the chance of clogging as the flow passes through the station. This provides multiple openings at each station so that, if one opening should clog, the other two openings can carry the flow through the station.

It is understood that a larger number of closely spaced fluid-passing openings may constitute the inlet and outlet stations 136 and 146 as long as the total cross-sectional area of the openings associated with each station exceeds a minimum size so that there is a minimum amount of clogging across the station.

In the preferred embodiment, having 8 inches (20 cm) between the centers of like fluid-passing stations, the dimension of each fluid-passing opening is approximately 0,15 cm (0.060 inch) in width, a height substantially the same as the height of strips 130 and 140 of about 0,025 cm (0.010 inch) and a length of about 0,18 cm (0.070 inch) which is substantially the same as the width of the strips.

The length of the flow passage through each fluid-passing opening is substantially longer than the mean average between the width and height dimensions of the fluid-passing opening. In effect, each fluidpassing opening is in itself a short pressure-drop channel. With reference to Figure 6, this pressure-drop phenomena may be explained as follows. The flow from segment 114B of flow channel 114 comes directly toward the flow from segment 114C which is coming from the opposite direction, and they meet at the fluid-passing outlet 146B. Each flow thus makes a 90° turn and flows straight for about 0.070 inch (0,18cm) through the length of fluid-passing opening 146B. It is desirable to have the length of the fluid-passing opening (for example, 146B), which is also the thickness of wall 140, at least three times the thickness of the common wall 116 to get an increase in friction and pressure loss as the flow makes the sharp 90° turn in going through the fluid-passing openings from the flow-restricting passage to the exterior of the hose. The same relationship exists for the remaining fluidpassing opening 136 relative to the thickness of common wall 116.

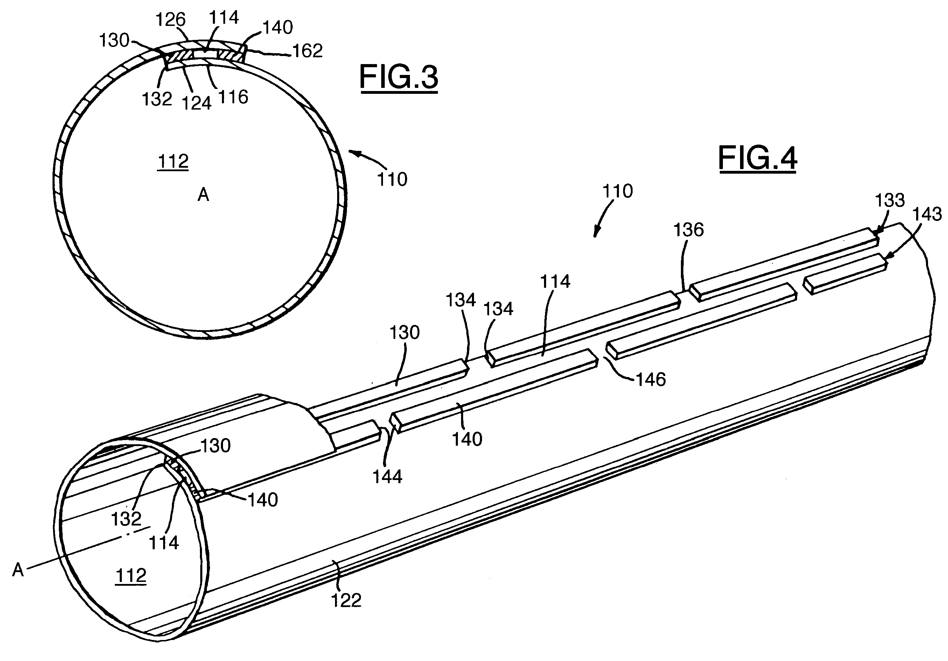

In the embodiment of Figure 4, using a 152 um (6 mil.) polyethelene film, the passage 114 has a generally rectangular configuration with a height of approximately 0,025 cm (0,010 inch) and a width of about 0,18 cm (0,070 inch). The fluid-passing openings 136 are spaced approximately 20 cm (eight inches) apart, and the outer openings 146 are spaced 20 cm (eight inches) apart with each opening 146 being located intermediate between, but spaced from, a pair of openings 136.

As the main supply channel 112 of hose 110 is pressurized at 0,414 bar (6 psi), water flows through first inlet stations 136 located in wall member 133 which separates channel 112 and passage 114. The flow is then divided and moves within passage 114 to the nearest outlet station 146 on either side of the first inlet station 136. Flow-restricting passage 114 has a length between inlet stations and a cross section of a size to reduce the pressure by approximately 0,407 bar (5.9 psi) within passage 114 between fluid inlet stations 136 and outlet stations 146. The flow is then discharged to the exterior of the hose through discharge fluid-passing openings or outlet stations 146 in wall member 143 with a slight pressure loss of about 0,007 bar (0.1 psi).

Because of the friction created as water passes through the small fluid passage 114, the pressure adjacent to the discharge fluid-passing openings 146 is negligible (such as 0,007 bar (0.1 psi) or less), and the water actually drips out through the openings 146 under substantially quiescent conditions under almost no outward pressure.

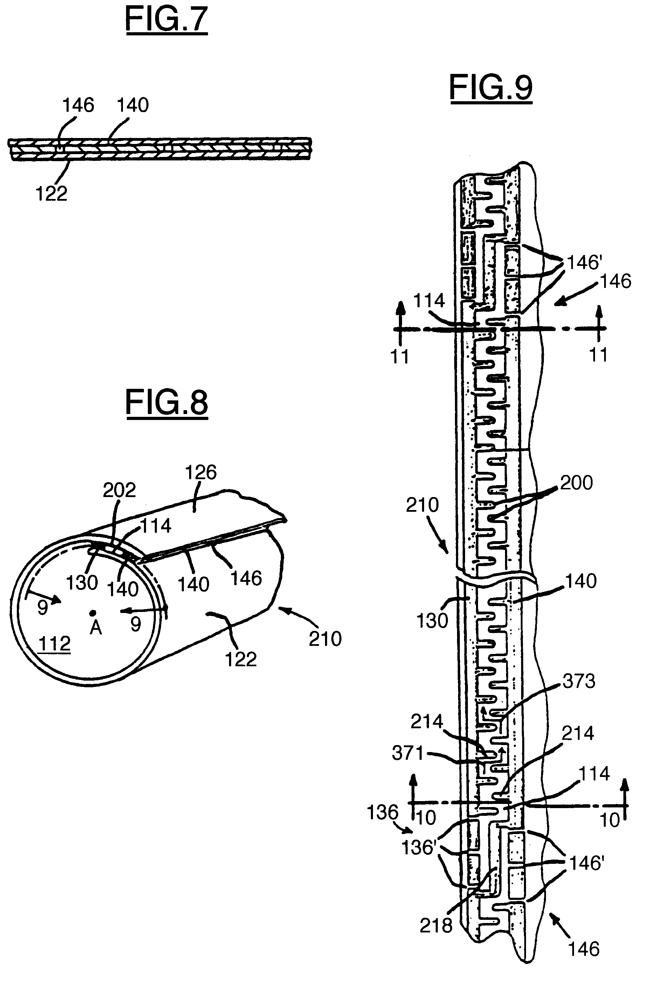

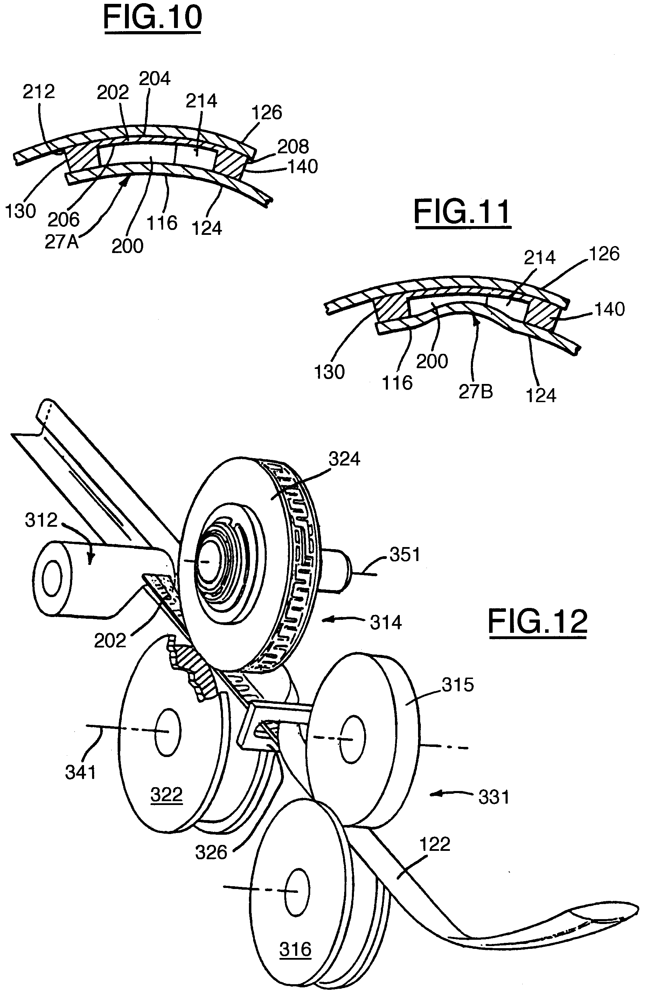

With reference to Figures 8 through 11, one embodiment of the subject invention will be described. According to the invention, this is characterized by the provision of a flow-restricting passage in the form of a serpentine or zig-zag path. With specific reference to Figure 10, the structure associated with creating this path may be described. An elongated flat ribbon 202 of plastic material passes through a molding operation (to be described in detail hereinafter) in order to create the flow-restricting path or channel 114. After molding, the sheet 202 as oriented in Figure 10 contains a planar top surface 204 and a planar bottom surface 206. The sheet also defines right edge 208 and left edge 212. Extending outwardly away from surface 206 and along each of the edges 208 and 212 are associated strips 130 and 140. Each strip extends in a generally longitudinal direction and is essentially parallel with the longitudinal axis A of the hose 210.

The strips are arranged so that they define a space between each other. This space with additional structure will become the passage 114. Positioned periodically within the space and emanating from each of the strips 130 and 140 are a series of transverse fingers 214. The fingers associated with strip 130 and the fingers associated with strip 140 are arranged in an interdigitated fashion at a predetermined spacing from each other.

In order to create a fluid communication between the path 114 and the main supply channel 112, a series of openings 136', which define an inlet station 136, are molded into the strip 130. In like manner, in order to create an exit or discharge opening for water escaping from the channel 114, there is provided in strip 140 a series of three closely spaced outlets 46' constituting an outlet station 146.

As can be seen, with reference to Figure 9, each inlet channel 136 being formed in strip 130 is essentially opposite each outlet 146 formed in strip 140. However, through the provision of a ridge 218 placed into channel 114, the inlets and outlets are separated from each other so that for each flow restricting channel 114 there is only one inlet station 136 associated with a specific downstream outlet station 146.

As the flow moves from an inlet station 136 to its flow connecting outlet station 146, the serpentine design of the flow-restricting path 114 makes it necessary for the water to travel a total distance which is substantially equal to three times the shortest distance between the inlet station 136 and its associated outlet station 146. Additional friction and pressure drop is created because the flow has to make two right angle turns as it moves past each transverse finger 214, as shown by arrows 371 and 373. The pressure created by the combination of the longer flow path and the numerous right angle turns permits the flow path 114 to have a larger cross section in order to provide less chance of clogging while still maintaining the same flow rate.

Beginning at a pressure of 8 psi (0,552 bar) in the main supply channel 112, there is approximately a 7.9 psi (0,545 bar) pressure drop within the flow-restricting channel 114 and a further pressure drop of about 0.1 psi (0,0069 bar) as the flow is discharged from the outlet openings 146'.

Figure 10 illustrates the approximate shape of common wall 124 as it is in its pressurized position 27A within passage 114 near to but downstream of inlet station 136. The common wall 116 maintains essentially the same contour as the outer margin 126 because the pressure within the channel 114 is essentially the same as the pressure in the main supply channel 112 at this point.

Figure 11 illustrates the outward deflection of the common wall 116 at point 27B due to the approximate 7.9 psi (0,545 bar) pressure differential between the main supply channel 112 and the flow-restricting channel 114 at this point. The pressured position 27B is within passage 114 near to but upstream of outlet station 146. This deflection of the common wall at 278 reduces the size and the flow of the flow-restricting channel 114. When the hose is operating under very low pressure, as occurs at the beginning and end of each watering cycle, the common wall 116 at point 27B returns to its normal position (like 27A in Figure10) and allows any accumulated foreign particles to flush out through the full size channel 114.

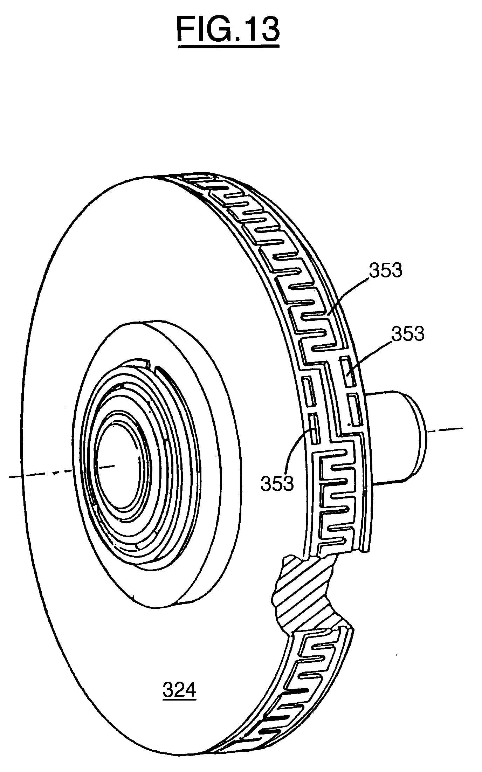

With reference to Figures 12 and 13, a method and apparatus for manufacturing a hose similar to that shown in Figure 9 are disclosed.

Basically, the method and apparatus of Figures 12 and 13 contemplate the disposition of a thermoplastic hot melt ribbon 202 in a parallel relationship extending longitudinally along the interior surface on one of the margins 126 of elongated film 122. The film and ribbon are continually advanced and pass through a molding or forming station 314 where the ribbon is deformed according to a predetermined pattern to create the various inlet and outlet stations and serpentine passageways 114 found in the final hose. The film continues to advance and eventually passes through a guide which causes the exterior surface along the other margin 124 to be disposed about the beads. The film then advances through the nip of a pair of forming wheels and emerges as the finally assembled hose.

Initially, the impervious film 122 is produced in a flat state. The film 122 is introduced into the machine by placing it in its flat state under the nozzle 312 of a conventional extrusion nozzle where the ribbon 202 is being extruded, and, at the same time, between the nip of the opposed rolls 322 and 324, which constitute the molding station 314. The film is also folded back upon itself and passed through a stationary guide nember 326 located downstream of the molding station. The film, after passing through the guide station, is received within the nip of a pair of forming wheels 315 and 316, which constitute the forming station 131. The film emerges from the forming station as the complete hose. During production, the hose is continually advanced by the rotation of the forming wheels.

Wheel 324, which constitutes the molding wheel, is disposed above wheel 322 and rotates about an axis 351 which is essentially parallel to the rotation axis 341 of the bottom wheel. Wheel 324 has disposed about its periphery a number of indentations 353 positioned in a predetermined arrangement in order to produce the desired pattern in the finished hose shown in Figure 9.

An alternate method and apparatus is to extrude a one-piece flat sheet to create a composite of the film 122 with appropriate structure formed along one margin as it leaves the extrusion die. The structure is similar to ribbon 202. The flat sheet with appropriate structure, while still hot, then passes through a station to mold the structure of the preferred embodiment.

While descriptions herein have generally referred to water and fluid passages, it is understood the same hose can be used for chemical solutions such as insecticides, fungicides, fertilizers and also compressed air for soil aeration.

Since there is a wide variety of conditions encountered in the field, it is understood that the preferred embodiment is just one of the many combinations of ratios and sizes of first fluid-passing openings, spacing of discharge fluid-passing openings, and pressures introduced into the main supply channel, which fall within the scope and function of this invention.

The foregoing is considered as illustrative only of the principles of the invention. Further, since numerous modifications and changes will readily occur to those skilled in the art, it is not desired to limit the invention to the exact construction and operation shown and described, and accordingly all suitable modifications and equivalents may be resorted to, falling within the scope of the invention as claimed.

## Claims

1. An elongated fluid distributing hose (210) for use in a fluid distributing system, said hose comprising : an elongated sheet of water-impervious plastics material (122) having two longitudinally extending opposite margins (124, 126), said material being folded upon itself such that said margins overlap one another ; two longitudinally extending strips (130, 140) transversally spaced from one another, disposed between and secured to said two overlapping margins and defining between them a plurality of discrete longitudinally extending flow-restricting passages (114) disposed longitudinally end-to-end ; a continuous longitudinal main supply channel (112) defined by said sheet material (122) and a first (130) of said strips, said supply channel being adapted for fluid communication with a source of fluid under pressure ; a series of longitudinally spaced inlets (136) for providing fluid communication between said main supply channel and each of said flow-restricting passages ; and a series of longitudinally spaced outlets (146) passing fluid from each of said flow-restricting passages to the exterior of the hose, characterized in that said discrete flow-restricting passages (114) are defined by zig-zag or serpentine flow-restricting paths molded into an elongated ribbon (202) of plastic material disposed between and secured to said overlapping margins (124, 126).

2. The hose of claim 1 wherein a ridge (218) is formed between the discrete flow-restricting passages (114) separating them from each other.

3. The hose of claim 1 or 2 wherein transverse fingers (214) are extended from each of said two strips (130, 140) toward the other of said strips.

4. The hose of claim 3 wherein said transverse fingers (214) are arranged in an interdigitated fashion at a predetermined spacing from each other creating said serpentine path.

5. The hose of anyone of claims 1 to 4 wherein each inlet (136) to each of said discrete flow-restricting passages (114) comprises several closely spaced openings (136').

6. The hose of anyone of claims 1 to 5 wherein each outlet (146) to each of said discrete flow restricting passages (114) comprises several closely spaced openings (146').

7. The hose of claim 1 or 5 wherein said inlets (136) are provided in said first strip (130).

8. The hose of claim 1 or 6 wherein said outlets (146) are provided in the other (140) of said strips.

9. The hose of claims 1 wherein each inlet (136) is connected to one outlet (146) by one flow-restricting passage (114).

10. The hose of anyone of claims 1 to 9 wherein the length of the serpentine fluid path within each of said flow-restricting passages (114) is substantially equal to three times the distance between each of said inlets (136) and the corresponding outlets (146).

11. The hose of anyone of the preceding claims, wherein the inner (124) of said margins is stretchable and deflectable outwardly (27B) into said flow-restricting passage (114) under the increase of the pressure differential across said margin (124) occuring in response to an increase of the water pressure in said main channel (112), in order to increase the friction within said passage (114), thus providing a flow-regulating effect and allowing the water to drip out of each outlet under substantially quiescent conditions with almost no pressure drop across each outlet.

## Patentansprüche

1. Strömungsmittelverteilerschlauch (210) für ein Fluidverteilersystem, bestehend aus einer langgestreckten Folie aus wasserundurchlässigem Material (122) mit zwei gegenüberliegenden Längsrändern (124, 126), wobei das Material derart gefaltet ist, daß sich die Ränder überlappen; zwei Längsstreifen (130, 140), die in Querrichtung beabstandet, zwischen den beiden überlappenden Rändern angeordnet und an diesen befestigt sind und zwischen sich mehrere diskrete Strömungsbegrenzungslängskanäle (114) bilden, die in Längsrichtung endweise angeordnet sind; einem kontinuierlichen Längshauptzufuhrkanal (112), der von dem Folienmaterial (122) und einem ersten (130) der Streifen gebildet ist, wobei der Zufuhrkanal zur Strömungsmittelverbindung mit einer Druckströmungsmittelquelle geeignet ist; einer Reihe von in Längsrichtung beabstandeten Einlässen (136) zur Strömungsmittelverbindung zwischen dem Hauptzufuhrkanal und jedem Strömungsbegrenzungskanal; und einer Reihe von in Längsrichtung beabstandeten Auslässen (146), die Strömungsmittel von jedem Strömungsbegrenzungskanal zum Äußeren des Schlauches leiten,
**dadurch gekennzeichnet, daß**
die diskreten Strömungsbegrenzungskanäle (114) durch Zick-Zack- oder Serpentinenströmungsbegrenzungspfade gebildet sind, die in eine Längsrippe (202) aus Kunststoffmaterial geformt ist, die zwischen den überlappenden Rändern (124, 126) angeordnet und an diesen befestigt ist.

2. Schlauch nach Anspruch 1, bei dem eine Rippe (218) zwischen den diskreten Strömungsbegrenzungskanälen (114) ausgebildet ist, die diese voneinander trennt.

3. Schlauch nach Anspruch 1 oder 2, bei dem sich Quervorsprünge (214) von jedem der beiden Streifen (130, 140) zum anderen Streifen erstrecken.

4. Schlauch nach Anspruch 3, bei dem die Quervorsprünge (214) ineinandergreifend mit einem vorbestimmten Abstand voneinander einen Serpentinenpfad bildend angeordnet sind.

5. Schlauch nach einem der Ansprüche 1 - 4, bei dem jeder Einlaß (136) zu jedem der diskreten Strömungsbegrenzungskanäle (114) mehrere dicht beieinanderliegende Öffnungen (136') umfaßt.

6. Schlauch nach einem der Ansprüche 1 - 5, bei dem jeder Auslaß (146) jeder der diskreten Strömungsbegrenzungskanäle (114) mehrere dicht beieinander liegende Öffnungen (146') umfaßt.

7. Schlauch nach Anspruch 1 oder 5, bei dem die Einlässe (136) im ersten Streifen (130) vorgesehen sind.

8. Schlauch nach Anspruch 1 oder 6, bei dem die Auslässe (146) im anderen Streifen (140) vorgesehen sind.

9. Schlauch nach Anspruch 1, bei dem jeder Einlaß (136) mit einem Auslaß (146) durch einen Strömungsbegrenzungskanal (114) verbunden ist.

10. Schlauch nach einem der Ansprüche 1 - 9, bei dem die Länge des Serpentinenströmungsmittelpfades in jedem der Strömungsbegrenzungskanäle (114) im wesentlichen dem dreifachen Abstand zwischen jedem der Einlässe (136) und den entsprechenden Auslässen (146) gleich ist.

11. Schlauch nach einem der vorhergehenden Ansprüche, bei dem der innere (124) dieser Ränder dehnbar und bei einer aufgrund einer Erhöhung des Wasserdruckes im Hauptkanal (112) auftretenden Zunahme der Druckdifferenz beiderseits dieses Randes (124) nach außen hin (27B) in den Strömungsbegrenzungskanal (114) verformbar ist, um die Reibung im Strömungsbegrenzungskanal (114) zu erhöhen, so daß ein Strömungsregulierungseffekt bewirkt wird, und das Wasser aus jedem Auslaß unter im wesentlichen Ruhebedingungen mit nahezu keinem Druckabfall über jeden Auslaß austropfen kann.

## Revendications

1. Tuyau allongé (210) de distribution de fluide, destiné à être utilisé dans un système de distribution de fluide, ledit tuyau comprenant : une feuille allongée (122) de matière plastique imperméable à l'eau, présentant deux parties marginales opposées (124, 126) qui s'étendent longitudinalement, ledit matériau étant replié sur lui-même de manière que lesdites parties marginales se recouvrent ; deux bandes (130, 140) s'étendant longitudinalement, transversalement espacées l'une de l'autre, disposées entre lesdites deux parties marginales qui se recouvrent en leur étant fixées et définissant entre elles une pluralité de passages de limitation d'écoulement (114), séparés, qui s'étendent longitudinalement et sont disposés longitudinalement bout à bout ; un canal principal d'alimentation (112), longitudinal et continu, défini par ledit matériau en feuille (122) et une première (130) desdites bandes, ledit canal d'alimentation étant adapté à une communication de fluide avec une source de fluide sous pression ; une série de moyens d'entrée (136) longitudinalement espacés pour assurer une communication de fluide entre ledit canal principal d'alimentation et chacun desdits passages de limitation d'écoulement ; et une série de moyens de sortie (146) longitudinalement espacés pour faire passer le fluide de chacun desdits passages de limitation d'écoulement vers l'extérieur du tuyau, caractérisé en ce que lesdits passages de limitation d'écoulement séparés (114) sont définis par des trajets de restriction d'écoulement en zig-zag ou en serpentin, moulés dans un long ruban (202) de matière plastique disposé entre lesdites parties marginales qui se recouvrent (124, 126) en leur étant fixé.

2. Tuyau selon la revendication 1, dans lequel une arête (218) est formée entre les passages séparés (114) de limitation de l'écoulement en les séparant les uns des autres.

3. Tuyau selon la revendication 1 ou 2, dans lequel des doigts transversaux (214) partent de chacune desdites deux bandes (130, 140) en direction de l'autre desdites bandes.

4. Tuyau selon la revendication 3, dans lequel lesdits doigts transversaux (214) sont disposés de manière entrecroisée avec un espacement prédéterminé entre eux pour créer ledit passage en serpentin.

5. Tuyau selon l'une quelconque des revendications 1 à 4, dans lequel chaque moyen d'entrée (136) dans chacun desdits passages séparés (114) de restriction de l'écoulement comprend plusieurs ouvertures (136') faiblement espacées.

6. Tuyau selon l'une quelconque des revendications 1 à 5, dans lequel chaque moyen de sortie (146) de chacun desdits passages séparés (114) de restriction de l'écoulement comprend plusieurs ouvertures (146') faiblement espacées.

7. Tuyau selon la revendication 1 ou 5, dans lequel lesdits moyens d'entrée (136) sont formés dans ladite première bande (130).

8. Tuyau selon la revendication 1 ou 6, dans lequel lesdits moyens de sortie (146) sont formés dans ladite autre bande (140).

9. Tuyau selon la revendication 1, dans lequel chaque moyen d'entrée (136) est couplé à un moyen de sortie (146) par un passage (114) de restriction de l'écoulement.

10. Tuyau selon l'une quelconque des revendications 1 à 9, dans lequel la longueur du trajet en serpentin du fluide à l'intérieur de chacun desdits passages (114) de restriction de l'écoulement est sensiblement égale au triple de la distance entre chacun desdits moyens d'entrée (136) et les moyens de sortie correspondants (146).

11. Tuyau selon l'une quelconque des revendications précédentes, dans lequel la partie marginale intérieure (124) peut être étirée et fléchir vers l'extérieur (27B) dans ledit passage (114) de restriction de l'écoulement, sous l'effet de l'augmentation de la différence de pression de part et d'autre de ladite partie marginale (124) qui se produit en réponse à une augmentation de la pression de l'eau dans ledit canal principal (112), afin d'augmenter les frottements à l'intérieur dudit passage (114) et d'avoir ainsi un effet de régulation du débit et permettre à l'eau de sortir goutte à goutte par chaque moyen de sortie dans des conditions sensiblement stables, avec pratiquement aucune chute de pression dans chaque moyen de sortie.
